(19) Europäisches Patentamt / European Patent Office / Office européen des brevets

(11) **EP 2 713 233 A2**

(12) **EUROPÄISCHE PATENTANMELDUNG**

(43) Veröffentlichungstag:
**02.04.2014 Patentblatt 2014/14**

(51) Int Cl.:
***G05D 23/19*** *(2006.01)*

(21) Anmeldenummer: **13185667.6**

(22) Anmeldetag: **24.09.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **26.09.2012 DE 102012217417**

(71) Anmelder: **Seiptius, Gordon**
**39524 Wust-Fischbeck (OT Sydow) (DE)**

(72) Erfinder: **Seiptius, Gordon**
**39524 Wust-Fischbeck (OT Sydow) (DE)**

(74) Vertreter: **Gulde Hengelhaupt Ziebig & Schneider**
**Patentanwälte - Rechtsanwälte**
**Wallstrasse 58/59**
**10179 Berlin (DE)**

(54) **Verfahren zur Regelung einer Raumtemperatur, Regler für eine Kühlvorrichtung und Kühlvorrichtung**

(57)    Verfahren zur Regelung einer Raumtemperatur eines Raumes (2) mit einer Kühlvorrichtung (1), mit den Schritten:
- Messen der Raumtemperatur;
- Messen der Zeitdauer eines Temperaturanstiegs der Raumtemperatur von einem Sollwert bis zu einer minimalen Regeldifferenz;
- Einschalten der Kühlvorrichtung (1) bei Überschreiten der minimalen Regeldifferenz;
- Messen der Zeitdauer eines Temperaturabfalls der Raumtemperatur von der minimalen Regeldifferenz bis zu dem Sollwert;
- Ausschalten der Kühlvorrichtung (1) bei Erreichen des Sollwerts;
- Messen der Zeitdauer und/oder der Temperatur eines Überschwingens der Kühlvorrichtung (1) nach Erreichen des Sollwerts;
- Berechnen eines vorzeitigen Einschaltpunkts und/oder eines vorzeitigen Ausschaltpunkts für die Kühlvorrichtung (1) basierend auf wenigstens einer Zeitdauer und/oder wenigstens einer gemessenen Temperatur; und
- Regeln der Raumtemperatur unter Verwendung des vorzeitigen Einschaltpunkts und/oder des vorzeitigen Ausschaltpunkts für die Kühlvorrichtung (1).

Figur 1

Printed by Jouve, 75001 PARIS (FR)

**Beschreibung**

Die Erfindung betrifft ein Verfahren zur Regelung einer Raumtemperatur eines Raumes mit einer Kühlvorrichtung, einen Regler für eine Kühlvorrichtung eines Raumes und eine Kühlvorrichtung für einen zu kühlenden Raum.

Technologischer Hintergrund

Der Regler beziehungsweise die Regelung wird eingesetzt für Anwendungen in der Kältetechnik, insbesondere für Kaltdampfanlagen. Es werden hiermit Kühlstellen und Kälteanlagen geregelt. Weiterhin können kleine Lüftungsanlagen geregelt werden. Ebenso ist ein Einsatz für Kälteverdichter mit Frequenzumrichter und Verbundanlagen denkbar.

Es ist Aufgabe der Erfindung, die Regelung von Kühlvorrichtungen dahingehend zu verbessern, dass eine Energieeinsparung bei der Kühlung erzielt werden kann.

Zusammenfassung der Erfindung

Diese Aufgabe wird mit den Merkmalen der Ansprüche 1, 6 beziehungsweise 10 gelöst. Vorteilhafte Ausgestaltungen sind in den abhängigen Ansprüchen definiert.

Gemäß einem ersten Aspekt der Erfindung umfasst ein Verfahren zur Regelung einer Raumtemperatur eines Raumes mit einer Kühlvorrichtung die Schritte:

- Messen der Raumtemperatur;
- Messen der Zeitdauer eines Temperaturanstiegs der Raumtemperatur von einem Sollwert bis zu einer minimalen Regeldifferenz;
- Einschalten der Kühlvorrichtung bei Überschreiten der minimalen Regeldifferenz;
- Messen der Zeitdauer eines Temperaturabfalls der Raumtemperatur von der minimalen Regeldifferenz bis zu dem Sollwert;
- Ausschalten der Kühlvorrichtung bei Erreichen des Sollwerts; Messen der Zeitdauer und/oder der Temperatur eines Überschwingens der Kühlvorrichtung nach Erreichen des Sollwerts;
- Berechnen eines vorzeitigen Einschaltpunkts und/oder eines vorzeitigen Ausschaltpunkts für die Kühlvorrichtung basierend auf wenigstens einer Zeitdauer und/oder wenigstens einer gemessenen Temperatur; und
- Regeln der Raumtemperatur unter Verwendung des vorzeitigen Einschaltpunkts und/oder des vorzeitigen Ausschaltpunkts für die Kühlvorrichtung.

Vorteilhafterweise werden die Temperaturen und/oder die Zeiten ins Verhältnis gesetzt und daraus sich daraus ein vorzeitiger Einschaltpunkt und/oder ein vorzeitiger Ausschaltpunkt berechnet. Vorzeitig bedeutet, dass diese beiden Punkte definiert sind, auch wenn die Temperaturen noch nicht erreicht wurden. Das heißt, dass die Kältemaschine vor Erreichen des Raumtemperatursollwertes abgeschaltet wird und durch die Latenz des Verdampfers und die Latenz des im Ausblas beziehungsweise der Kühlluft liegenden Kühlguts den Raum bis zum Raumtemperatursollwert weiter kühlt. Somit fährt die Kühlvorrichtung oder Kälteanlage durchschnittlich in einem höheren Verdampfungsdruckbereich, wodurch sich die Laufzeit der Kältemaschine verringert und eine Energieeinsparung von etwa 3 bis 5 % erzielt werden kann.

Gewissermaßen arbeitet die Regelung nach menschlichen Eigenarten, auch Anthropomorphisierung genannt. Diese Verfahrensweise dient zur optimalen Regelung und zum optimalen Energieverbrauch. Bei diesem Verfahren werden Temperaturen erfasst und Tendenzen berechnet, die eine Speicherung der Energie, den Wärmeentzug (Kälte) und die Wärmeausgabe (Abtauheizung) in der Anlage und im Kühlgut betrachten, so dass nur die nötigste Energie aufgenommen wird, wobei die Latenz von Anlagenteilen ausgenutzt wird.

Die mittleren Verfahrensschritte, das heißt ohne den ersten und letzten Schritt, können auch als Kalibrierung oder Einstellung des Reglers beziehungsweise der Anlage verstanden werden. Dort wird die Anlage für eine optimale Regelung gewissermaßen vermessen. Die minimale Regeldifferenz oder Regelabweichung ist derjenige Wert, ab dem begonnen wird, die Raumtemperatur auf den Sollwert zu regeln. Daher kann die minimale Regeldifferenz auch als Einschaltschwelle oder Grenzwert betrachtet werden. Die minimale Regeldifferenz ist relativ zum Sollwert und wird zum Beispiel in Kelvin angegeben. Als Grundeinstellung kann eine minimale Regeldifferenz von einem Kelvin eingestellt sein, die über Spezialparameter geändert beziehungsweise angepasst werden kann.

In einer besonders vorteilhaften Ausgestaltung ist vorgesehen, dass eine Pakettemperatur eines Verdampferpakets, das heißt Kühlrohre mit Lamellen im Verdampfer, gemessen wird und bei Überschreiten einer vorbestimmten Differenz zwischen der Raumtemperatur und der Pakettemperatur ein Abtauvorgang des Verdampfers der Kühlvorrichtung vorgenommen wird. Über die Differenz wird indirekt der Eisansatz am Verdampfer gemessen. Durch das Abtauen des Eises am Verdampfer wird die Anlage wieder in einen optimalen Betriebsbereich gebracht.

Vorteilhafterweise wird eine Überhitzung der Kältevorrichtung ermittelt anhand der Differenz einer Sauggastemperatur, die an einem Verdampfer oder an einer Ableitung eines Verdampfers der Kühlvorrichtung gemessen wird, und einer Verdampfungstemperatur, die basierend auf einem gemessenen Druck eines Kältemittels der Kühlvorrichtung ermittelt wird. Die Überhitzung ist eine wichtige Größe für Kühlvorrichtungen und kann auf die obige Art schnell und zuverlässig bestimmt werden.

Das Expansionsventil öffnet bei Anforderung Kühlen, danach strömt Kältemittel durch das Expansionsventil auf die Saugseite des Verdichters. Somit steigt der Druck auf der Saugseite des Verdichters. Über einen Druckschalter schaltet nun der Verdichter zu. Dabei wird das angesaugte Kältemittel im Verdichter verdichtet und zum Verflüssiger gepumpt. Der Verflüssiger entzieht dem Kältemittel die Wärme und verflüssigt es dadurch. Im Kältemittelsammler wird Kältemittel als Leistungsreserve gepuffert. Somit steht immer flüssiges Kältemittel vor dem Expansionsventil. Durch die berechneten Düsen im Expansionsventil entsteht ein Druckgefälle im Kältekreislauf zwischen der Hochdruckseite vor dem Expansionsventil und der Niederdruckseite (Saugseite vom Verdichter) nach dem Expansionsventil. Der Niederdruck wird auch Verdampfungsdruck genannt. Das expandierte Kältemittel strömt nun durch den Verdampfer und verdampft. Dabei nimmt das Kältemittel Wärme auf und wird dann durch den Verdichter wieder zum Verflüssiger gepumpt. Die Regulierung des Verdampfungsdruckes und der Überhitzung erfolgt durch das Expansionsventil. Die Regulierung des Hochdruckes erfolgt durch den Verflüssiger.

Vorteilig ist vorgesehen, dass der Öffnungszustand einer Tür des Raums überwacht wird und bei geöffneter Tür die Kühlvorrichtung ausgeschaltet wird. Durch die Abschaltung, die auch verzögert vorgenommen werden kann, wird ein Vereisen des Verdampfers verhindert. Gemäß einem weiteren Aspekt der Erfindung ist ein Regler für eine Kühlvorrichtung eines Raumes vorgesehen, aufweisend einen Eingang für einen Raumtemperatursensor zum Messen einer Raumtemperatur, eine Recheneinheit eingerichtet zur Berechnung eines vorzeitigen Einschaltpunkts und/oder eines vorzeitigen Ausschaltpunkts für die Kühlvorrichtung basierend auf gemessenen Temperaturverläufen der Raumtemperatur und einen Ausgang zum Einschalten und/oder Ausschalten der Kühlvorrichtung gemäß dem vorzeitigen Einschaltpunkt und/oder dem vorzeitigen Ausschaltpunkt. Es gelten die zuvor beschriebenen Vorteile und Modifikationen. Der Regler kann in Software und/oder Hardware realisiert sein.

Der Regler kann einen Eingang für einen Pakettemperatursensor zum Messen einer Pakettemperatur im Verdampfer haben und einen Ausgang für einen Abtauvorgang eines Verdampfers der Kühlvorrichtung aufweisen, wobei die Recheneinheit eingerichtet ist, bei Überschreiten einer vorbestimmten Differenz zwischen der Raumtemperatur und dem Pakettemperatursensor am Ausgang ein Signal für einen Abtauvorgang zur Verfügung zustellen.

Vorteilhafterweise kann der Regler einen Eingang für einen Sauggastemperatursensor zum Messen einer Sauggastemperatur an einer Ableitung eines Verdampfers der Kühlvorrichtung, einen Eingang für einen Kältemitteldrucksensor zum Messen eines Druck eines Kältemittels der Kühlvorrichtung und einen Ausgang für ein Expansionsventil der Kühlvorrichtung aufweisen, wobei die Recheneinheit eingerichtet ist, eine Überhitzung der Kältevorrichtung anhand der Differenz der Sauggastemperatur und einer Verdampfungstemperatur, die basierend auf einem gemessenen Druck des Kältemittels ermittelt wird, zu ermitteln und basierend auf der Überhitzung am Ausgang für das Expansionsventil ein Signal für das Expansionsventil zur Verfügung zu stellen.

Der Regler kann einen Eingang für einen Öffnungszustand einer Tür des Raums aufweisen, wobei die Recheneinheit eingerichtet ist, bei geöffneter Tür am Ausgang ein Signal zum Ausschalten der Kühlvorrichtung zur Verfügung zu stellen.

Gemäß einem weiteren Aspekt der Erfindung umfasst eine Kühlvorrichtung für einen zu kühlenden Raum einen Regler wie zuvor beschrieben. Es gelten die zuvor beschriebenen Vorteile und Modifikationen.

Kurzbeschreibung der Figuren

Die Erfindung wird nachfolgend anhand eines Ausführungsbeispiels und dazugehöriger Zeichnungen näher erläutert. Die Figuren zeigen:

Figur 1    ein schematisches Blockdiagramm einer Kühlvorrichtung mit Regler gemäß der Erfindung,

Figur 2    ein schematisches Blockdiagramm des Reglers, und

Figur 3    ein Diagramm eines Temperaturverlaufs über der Zeit zur Erläuterung des Verfahrens gemäß der Erfindung.

Detaillierte Beschreibung der Erfindung

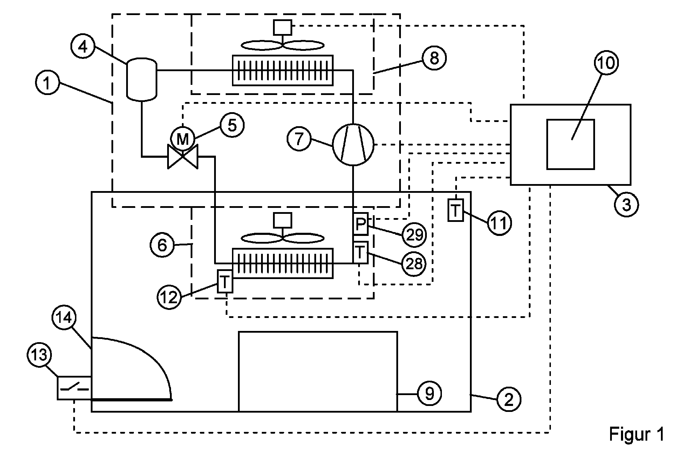

Figur 1 zeigt eine schematische Darstellung einer Kühlvorrichtung 1 für einen zu temperierenden beziehungsweise zu kühlenden Raum 2. Die Kühlvorrichtung oder Kälteanlage 1 wird von einem Regler 3 geregelt. Der Regler 3 kann Bestandteil der Kühlvorrichtung 1 sein.

Die Kühlvorrichtung 1 umfasst einen Sammler 4, in dem sich verflüssigtes Kältemittel befindet. Stromaufwärts in dem Kühlmittelkreislauf ist ein elektrische Expansionsventil (EEV) 5 angeordnet. Das Expansionsventil 5 hat den Zweck, einen Verdampfer 6 mit Verdampferpaket mit einer passenden Menge Kältemittel zu versorgen. Das Verdampferpaket umfasst Kühlrohre mit Lamellen im Verdampfer. Die Kältemittelzufuhr kann durch den Druckunterschied zwischen der Verflüssiger- und Verdampferseite geschehen. Die einfachste Lösung kann mit Hilfe eines Kapillarrohres erreicht werden, dass zwischen Verflüssiger und Verdampfer eingebaut wird. Hier wird ein ansteuerbares elektrisches Ventil verwendet. Hinter dem Verdampfer am Saugrohr (Niederdruckseite) sitzt der Sauggastemperatursensor 28, der die Kältemitteltemperatur nach der Wärmeaufnahme misst. An derselben Stelle oder in unmittelbarer Nähe sitzt auch ein Druckanschluss mit dem Verdampfungsdrucksensor 29, der für die Ermittlung der Verdampfungstemperatur verwendet wird.

Der Verdampfer 6 befindet sich in dem oder an einer Wand des Raums 2 und er, beziehungsweise das durch den Verdampfer 6 zirkulierende Kältemittel, nimmt Wärme aus dem Raum 2 auf. Anschließend wird das Kältemittel in einem Verdichter 7 verdichtet und einem Verflüssiger 8 zugeführt, wo das dampfförmige Kältemittel wieder verflüssigt wird. Der Verflüssiger 8 ist mit dem Sammler 4 verbunden, um so den Kreislauf für das Kältemittel zu bilden.

Die gezeigte Kühlvorrichtung 1 ist hier beispielhaft gezeigt und beschrieben, es können weitere Konfigurationen oder Arten von Kälteanlagen verwendet werden, die geeignet sind, den Raum 2 beziehungsweise in dem Raum 2 befindliches Kühlgut 9 zu kühlen.

Der Regler 3 enthält eine Recheneinheit 10 wie einen Microcontroller und kann in einem Gehäuse aus Kunststoff oder Edelstahl angeordnet sein, das einen IP66 Schutzgrad haben kann. Der Regler 3 ist mit einem Raumtemperatursensor 11 zum Messen der Raumtemperatur des Raumes 2, einem Pakettemperatursensor 12 zum Messen der Pakettemperatur im Verdampferpaket, umfassend Kühlrohre mit Lamellen im Verdampfer, einem Türsensor 13, der der Öffnungszustand einer Tür 14 des Raums 2 überwacht sowie mit der Kühlvorrichtung 1 verbunden. Der Regler 3 und die Kühlvorrichtung 1 sind über mehrere Ein- und Ausgänge miteinander verbunden. Die Verbindungen können einzeln beispielsweise als elektrische Leitungen oder als Bussystem ausgeführt sein. Basierend auf den Messwerten der Sensoren und davon im Regler 3 abgeleiteten Größen steuert der Regler 3 die Kühlvorrichtung 1 an, um die Raumtemperatur zu regeln.

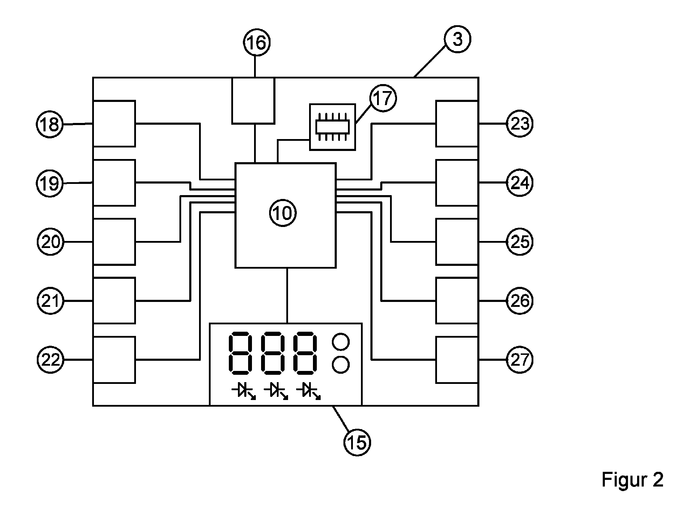

Im Folgenden wird anhand Figur 2 der Regler 3 beschrieben.

Der Regler 3 umfasst ein Netzteil, den Microcontroller 10, Anschluss- oder Klemmbereiche für Sensoren und Verbraucher sowie einen Lastteil für die Ansteuerung von zum Beispiel 230 V und/oder 400 V Verbrauchern.

Weiterhin besitzt der Regler 3 eine Eingabe/Ausgabe-Einheit 15 zum Beispiel mit LED Display, Status LEDs und Tasten zur Bedienung.

Der Microcontroller 10 wird mit einem Baudratenquarzoszillator von 14,745 MHz betrieben, um einen sehr geringen Fehleranteil bei der Datenübertragung über Schnittstellen zu ermöglichen.

Weiterhin besitzt die Schaltung einen Schnittstellentreiber beziehungsweise eine Schnittstelle 16 beispielsweise für eine RS422 Schnittstelle für die Datenkommunikation mit anderen

Controllern und/oder einem externen Bediengerat wie z. B. einem Notebook oder einem Personalcomputer. Weiterhin besitzt die Schaltung noch eine Serial Peripheral Interface (SPI) Schnittstelle, diese dient zur Programmierung im In-System-Programming (ISP) Modus. Diese Schnittstelle kann auch zur Hardwareerweiterung verwendet werden. Eine Überwachung, dass der Programmcode korrekt ausgeführt wird, wird durch einen Hardware-Watchdogtimer realisiert. Dieser wird bei Beginn des Programmcodes gestartet und bei Ende des Programmcodes zurückgesetzt. Wenn der Watchdog-Timer nicht bei jedem Zyklus zurückgesetzt wird, wird der komplette Microcontroller neu gestartet. Alternativ, aber auch zusätzlich, kann ein Software-Watchdogtimer vorgesehen sein.

In dem Regler 3 ist weiter eine Schnittstelle für einen Speicher oder ein Speichermodul 17 integriert. Mit dieser kann auf einem Speichermodul 17 eine Datenaufzeichnung zum Beispiel nach HACCP (Hazard Analysis and Critical Control Points-Konzept, Gefahrenanalyse und kritische Kontrollpunkte) realisiert werden. Über diese Schnittstelle können mit der Bediensoftware die Anlagendaten ausgelesen und Parameter verändert werden. Alle Regelfunktionen sind absolut autonom, adaptiv und instinktiv. Die Regler handeln nach menschlichen Eigenarten (Anthropomorphisierung). Es können alle in einer Kälteanlage 1 benötigten Komponenten angesteuert werden.

Der Regler 3 ist sehr klein. Er kann als einfacher Regler oder als Kleinschaltschrank verwendet werden. Er ist aufgeteilt in eine Reglerleiterplatte und Relaisleiterplatte, wobei die Verbraucher direkt angeschlossen werden können. Die Leiterbahnen und die Relais sind dafür ausgelegt. Technisch ist dieses Gerät ein Universalregler(Kleinschaltschrank) mit dem man folgende Funktionen und Anlagen regeln kann.

- Kühlstellenregelung mit E-Abtauung,
- Kühlstellenregelung mit E-Abtauung und elektronisches Expansionsventil PWM,
- Kühlstellenregelung ohne E-Abtauung,
- Kühlstellenregelung ohne E-Abtauung und elektronisches Expansionsventil PWM,
- Kühlstellenregelung mit Lüfterabtauung,
- Kühlstellenregelung mit Lüfterabtauung und elektronisches Expansionsventil PWM,

- Klimaregelung mit Heizen und Kühlen,
- Lüftungsanlagenregelung mit Heizen und Kühlen,
- Ventilregelung für Heizventile und Kühlventile 3 Punktregelung und Pumpenansteuerung,
- alle Funktionen besitzen ein Alarmsystem.

Dazu werden im Folgenden die Eingänge und Ausgänge des Reglers 3, die sämtlich mit dem Microcontroller 10 verbunden sind, erläutert.

Der Regler 3 hat einen Eingang 18 oder Temperaturfühlereingang für den Raumtemperatursensor 11, einen Eingang 19 oder Temperaturfühlereingang für den Pakettemperatursensor 12 und einen Eingang 20 oder Temperaturfühlereingang für den Sauggastemperatursensor 28, der die Sauggastemperatur der Kühlvorrichtung 1 misst. Die drei Temperaturfühlereingänge sind beispielsweise für Heißleiter oder NTC-Widerstände (Negative Temperature Coefficient Thermistors) mit 10 kΩ ausgelegt.

Der Regler 3 hat ferner einen Eingang 21 für den Drucksensor 29, der für 0,5 V - 4,5 V, ratiometrisch ausgelegt ist, sowie einen Eingang 22 für den Türkontakt, der als Digitaleingang ausgeführt ist.

Die Ausgänge sind in diesem Beispiel als Relaisausgänge an einer Klemmleiste realisiert. Der Ausgang 23 ist als Relaisausgang VDI bezeichnet und umfasst ein Spezialrelais 30 A als Dauerstromwechsler mit einem Einschaltstrom von 50 A. Damit werden der Verdichter 7 und ein Ölsumpf beziehungsweise eine Ölheizung der Kühlvorrichtung 1 angesteuert. Der Start des Verdichters 7 erfolgt über die Klemmleiste durch einen Druckschalter (Pump Down). Die Ölheizung wird über den Öffnerkontakt des Verdichterrelais angesteuert. Das heißt, wenn der Verdichter 7 ausgeschaltet ist, ist der Ölsumpfheizung aktiv. Der Verdichter 7 wird mit einem maximalen Strom von 14 A angesteuert, während der Ölsumpf mit einem maximalen Strom von 1 A angesteuert wird.

Der Ausgang 24 ist als Relaisausgang Heizung bezeichnet und umfasst ein Spezialrelais 16 A als Dauerstromwechsler mit einem Einschaltstrom von 30 A. Damit wird die Abtauheizung über die Klemmleiste über einen adaptiven Regler nach Vereisung mit einem maximalen Strom von 12 A angesteuert. Bei der Abtauheizung wird der Vereisungsgrad gemessen und die Heizung je nach Vereisung zugeschaltet. Ein permanentes und adaptives Überwachen aller Werte leitet dann die Abtauphase ein.

Der Ausgang 25 ist als Relaisausgang Lüfter bezeichnet und umfasst ein Spezialrelais 16 A als Dauerstromwechsler mit einem Einschaltstrom von 30 A. Damit wird der Lüfter nach Bedarf über die Klemmleiste über einen adaptiven Regler mit einem maximalen Strom von 3 A angesteuert. Der Lüfter wird nach Bedarf zugeschaltet und in der Abtauphase wird dieser dann abgeschaltet. Adaptiv wird ermittelt, wie lange die Abtropfzeit und die Vorkühlzeit ist. Danach schaltet der Lüfter wieder zu.

Der Ausgang 26 ist als Relaisausgang MV/EEV (Magnetventil, elektrisches Expansionsventil) bezeichnet und umfasst ein Spezialrelais 2 A als Dauerstromhalbleiter mit einem Einschaltstrom von 8 A. Damit wird der Lüfter nach Überhitzung über die Klemmleiste über einen adaptiven Regler mit einem maximalen Strom von 1 A angesteuert. Bei Nutzung eines elektronischen Expansionsventils 5 wird die Regelung adaptiv über die Sensoren angepasst und das Ventil 5 als Überhitzungsregelung des Verdampfers 7 angesteuert.

Der Ausgang 27 ist als Relaisausgang Alarm bezeichnet und umfasst ein Spezialrelais 6 A als Dauerstromwechsler mit einem Einschaltstrom von 16 A. Damit wird der Alarm bei einem Alarmfall über die Klemmleiste über einen Regler mit einem maximalen Strom von 2 A angesteuert. Das Alarmrelais wird angesteuert, wenn es Temperaturüber- und Temperaturunterschreitung gibt. Auch bei Sensorfehlern und Fühlerfehlern wird eine Störmeldung ausgegeben.

Der Digitaleingang 22 ist für einen Türkontakt vorbereitet. Er schaltet den Lüfter aus und stoppt die Kühlung bei längerer Öffnungszeit der Tür und gibt Alarm. Zum Zeitpunkt, wenn der Türalarm ausgelöst wurde, wird zur Schadensminimierung die Kühlvorrichtung wieder zugeschaltet. Alle Fühler und Sensoren besitzen eine Überwachung für Kurzschluss und Kabelunterbrechung.

Die Eingabe von Parametern für die Kühlvorrichtung 1, den Raum 2, den Regler 3 und/oder das Kühlgut 9 erfolgt ohne große Parameterliste und vorzugsweise mit deutschen Abkürzungen. Da der Regler 3 adaptiv ist, müssen nur wenige Parameter eingestellt werden. So muss der Benutzer nur die Funktion und den gewünschten Sollwert eingeben und den Rest entscheidet der Regler 3 zur Zufriedenheit des Benutzers selber. Gegebenenfalls müssen die Fühler oder Sensoren abgeglichen werden, die EEV-Regelung aktiviert und Alarmparameter verändert werden.

Die Darstellung erfolgt mit einem blauen Display mit 3 Stellen. Auf diesem Display wird die Raumtemperatur dargestellt und mit den beiden Tastern die Parameter eingestellt. Die Darstellung der Parameter erfolgt in deutschen Abkürzungen:

Die folgenden Werte werden frei zugänglich ohne Passwort dargestellt:

IST = Istwert Raumtemperatur
SOL = Sollwert Raumtemperatur
PAS = Password

Die folgenden Werte werden nur nach korrekter Eingabe des Passworts dargestellt:

AbF = Istwert Abtaufühler
übF = Istwert Überhitzungsfühler
drS = Istwert Drucksensor
übH = Istwert Überhitzung
Süb = Sollwert Überhitzung
Fun = Anlagenfunktion
nEt = Netzwerkadresse
PFL = Zeit für Pflichtabtauung
ALZ = Alarmverzögerungszeit
FrG = Fregen (Kältemittel)
AG1 = Abgleich Fühler 1
AG2 = Abgleich Fühler 2
AG3 = Abgleich Fühler 3
AG4 = Abgleich Fühler 4

Die folgenden Werte werden nur nach korrekter Eingabe des Sonderpassworts dargestellt:

Aüb = relativer Alarmsollwert Übertemperatur
Aun = relativer Alarmsollwert Übertemperatur
AbE = Sollwert maximale Abtauendtemperatur
diF = Sollwert minimale Regeldifferenz
SOF = Anzeige Softwareversion

Darstellung und Meldungen:

AuS = Regler AUS
StP = Regler gestoppt
EIn = Regler EIN
EHo = Raumtemperatur zu hoch
Eti = Raumtemperatur zu tief
Eru = Raumfühler unterbrochen
Erb = Raumfühler gebrückt (Kurzschluss)
EPu = Paketfühler unterbrochen
EPb = Paketfühler gebrückt (Kurzschluss)
Eüu = Überhitzungsfühler unterbrochen
Eüb = Überhitzungsfühler gebrückt (Kurzschluss)
Edu = Drucksensor unterbrochen
Edb = Drucksensor gebrückt (Kurzschluss)
EZb = Zuluftfühler gebrückt (Kurzschluss)
EZu = Zuluftfühler unterbrochen
EAb = Aussenfühler gebrückt (Kurzschluss)
EAu = Aussenfühler unterbrochen
tür = Türalarm

Darstellung und Meldungen (Funktion Lüftung):

nFu = No Funktion
ZuF = Zulufttemperatur
AuF = Außentemperaturfühler
AG1 = Abgleich Fühler 1
AG2 = Abgleich Fühler 2
AG3 = Abgleich Fühler 3
AG4 = Abgleich Fühler 4

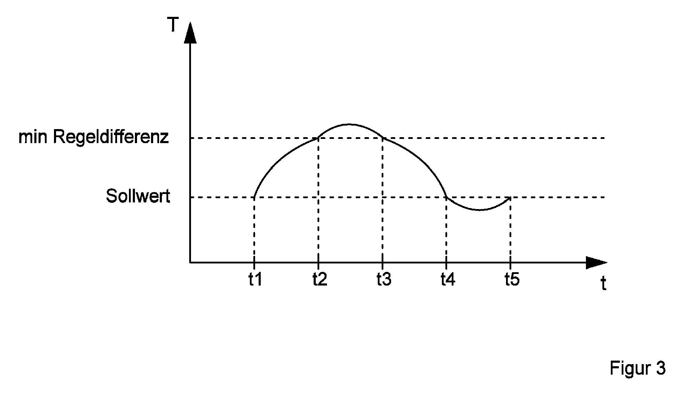

Nun wird im Folgenden anhand von Figur 3 die Funktionsweise der Regelung der Raumtemperatur des Raums 2 beschrieben.

In einem Hauptprogramm werden die Temperatursensoren 11, 12 sowie der Temperatursensor 28 und Drucksensor 29 der Kühlvorrichtung 1 abgetastet oder ausgelesen.

Es werden drei NTC 10 kΩ Temperatursensoren abgefragt. Hierbei handelt es sich um den Raumtemperatursensor 11, den Pakettemperatursensor 12 und den Sauggastemperatursensor 28. Die Abtastung der Sensoren erfolgt zyklisch. Ein Analog-Digitalwandler wandelt das analoge Temperatursignal in einen Wertebereich von 0 - 1024 um. In diesem Verfahren werden zwei Quadratische Gleichungen benötigt, die die Temperaturen zwischen -40 °C und +30 °C aus dem Wertebereich berechnen. Für den Wertebereich >= 182 erfolgt die Berechnung mit der Gleichung 0,11 * ADC-Wert - 29,84. Für den Wertebereich < 182 erfolgt die Berechnung mit der Gleichung 0,18 * ADC-Wert - 41,71.

Danach werden die Temperaturen als Single-Wert im Microcontroller 10 weiterverarbeitet. Diese und weitere Berechnungen werden im Microcontroller 10 ausgeführt, dort laufen auch das Hauptprogramm sowie Unterprogramme ab.

Für die Abtastung des Drucksensors wird ein Drucksensor mit einem ratiometrischen Signal abgefragt. Das ratiometrische Signal besitzt ein Signalbereich von 0,5 VDC bis 4,5 VDC. Bei Unterschreitung des Signals, also bei einem Wert von 0 VDC bis 0,5 VDC, wird eine Kabelunterbrechung des Sensors ermittelt. Bei Überschreitung des Signals, also bei einem Wert von 4,5 VDC bis 5 VDC, wird ein Kurzschluss ermittelt.

Bei dem Drucksensor 29 handelt es sich hier um den Verdampfungsdrucksensor T0 (T Null). Die Abtastung der Sensoren erfolgt zyklisch. Der Analog-Digitalwandler wandelt das analoge Drucksignal von 0,5 VDC bis 4,5 VDC in einen Wertebereich von 102 bis 922 um. In diesem Verfahren kann für jedes Kältemittel ein eigenes Kältemittelpolynom verwendet werden. Es können hierbei zwei Drucksensoren verwendet werden. Diese werden über die Kältemitteleinstellung ausgewählt. So wird ein Drucksensor -1 bis 12,8 bar für Kältemittel R134a, R404A, R407C, R410C und ein Drucksensor 0 bis 45 bar für Kältemittel R744 ($CO_2$) verwendet.

In einem ersten Schritt erfolgt die Berechnung des Anlagendrucks (Absolutdruck) aus dem ADC-Wert, das heißt einem Wertebereich von 0 bis 1014, der von einem Analod-Digital-Converter (ADC) aus einem 0-5 VDC gewandelt wurde.

Die benutzten Formeln für die Drucksensorberechnung im Programm sind:

Druckwert = 0,016829 * ADC-Wert - 1,7166
für Drucksensor -1 - 12,8 bar (0-13,8 bar absolut) 0,5 VDC bis 4,5 VDC ratiometrisch
Druckwert = 0,053659 * ADC-Wert - 4,4732
für Drucksensor 0 - 45 bar (1 - 46 bar absolut) 0,5 VDC bis 4,5 VDC ratiometrisch
0 - 0,5 V = 0 - 102 = Fehler Drucksensor
4,5 - 5 V = 922 - 1024 = Fehler Drucksensor

In einem zweiten Schritt erfolgt die: Berechnung der Verdampfungstemperatur aus dem Druckwert. Die Polynome für die Berechnung der Verdampfungstemperaturen werden wie folgt im Programm verwendet:

$$x = \text{Druckwert (Absolutdruck)}$$

R134a -30 °C bis +50 °C

Verdampfungstemperatur

$$= -0.00016171x^6 + 0.0076742x^5 - 0.14703x^4 + 1.4723x^3 - 8.5x^2 + 33.419x - 52.57$$

R404A -40 °C bis +50 °C

Verdampfungstemperatur

$$= -6.4983E\text{-}6x^6 + 0.00053675x^5 - 0.017866x^4 + 0.31x^3 - 3.0926x^2 + 21.031x - 63.006$$

R407C -30 °C bis +50 °C

'Verdampfungstemperatur

$$= -1.2714E\text{-}5x^6 + 0.00091658x^5 - 0.026732x^4 + 0.40868x^3 - 3.6205x^2 + 22.038x - 54.29$$

R410C -30 °C bis +50 °C

Verdampfungstemperatur

$$= -7.0943E\text{-}7x^6 + 8.1095E\text{-}5x^5 - 0.0037782x^4 + 0.093262x^3 - 1.3551x^2 + 13.886x - 59.08$$

R744 -30 °C bis +50 °C

Verdampfungstemperatur

$$= -2.6073E\text{-}9x^6 + 7.3321E\text{-}7x^5 - 8.497E\text{-}5x^4 + 0.0052877x^3 - 0.19733x^2 + 5.3579x - 78.575$$

Danach wird die Verdampfungstemperatur als Single-Wert im Microcontroller 10 weiterverarbeitet.

Weiterhin erfolgt die Berechnung der Überhitzung.

Die Berechnung der Überhitzung ist notwendig, um über das elektronische Regelventil 5 die Füllung des Verdampfers 6 mit expandiertem Kältemittel zu regeln. Die Berechnung erfolgt über folgende Formel und den zuvor berechneten Werten der Sauggastemperatur und der Verdampfungstemperatur:

$$\text{Überhitzung = Sauggastemperatur – Verdampfungstemperatur}$$

Dazu werden Parameter zur Regelung der Kälteanlage 1 benötigt. Auch bei einem Regelsystem, das nach menschlichen Eigenarten (Anthropomorphisierung) handelt, müssen gewisse Parameter vorgegeben werden.

So muss der Raumtemperatursollwert eingegeben werden. Dieser Wert wird benötigt, um festzulegen, welche Temperatur das Kühlgut 9 haben soll. Dieser Wert wird durch den Betreiber (Anlagennutzer) festgelegt.

Ferner erfolgt eine Eingabe des Sollwerts der Überhitzung. Dieser Wert wird benötigt, um festzulegen mit welcher Überhitzung die Kälteanlage 1 betrieben werden soll. Dieser Wert ist abhängig von der Berechnung und der Konstruktion der Kälteanlage 1 und liegt im Ermessen des Kälteanlagenbauers (Anlagenerrichter).

Auch erfolgt eine Eingabe der Anlagenfunktion. Hierbei wird festgelegt, welcher Typ von Kälteanlage geregelt werden soll und welche Eigenschaften diese Kälteanlage besitzt. Diese Auswahl ist abhängig von der Berechnung und Konstruktion der Kälteanlage und liegt im Ermessen des Kälteanlagenbauers.

Die Anlagenfunktionen unterscheiden sich wie folgt:

Funktionstabelle:

| Code | Regler | Heizen Kühlen | Lüftung | Lüfterabtaung | elektr. Abtauung | Lüfter Dauerlauf | Lüfter mit Kühlung | Relais 1 | Relais 2 | Relais 3 | Relais 3 |
|------|--------|---------------|---------|---------------|------------------|------------------|--------------------|----------|----------|----------|----------|
| 0 | X | | | | | | | | | | |
| 1 | | X | | | | | | Kühlen | Heizen | | Alarm |
| 2 | | | X | | | | | Kühlventilator | Heizventilator | Pumpe Ventilator | Alarm |
| 3 | | | | | X | X | | Kühlen | Abtauen | Lüfter | Alarm |
| 4 | | | | | X | | X | Kühlen | Abtauen | Lüfter | Alarm |
| 5 | | | | X | | X | | Kühlen | | Lüfter | Alarm |
| 6 | | | | X | | | X | Kühlen | | Lüfter | Alarm |

EP 2 713 233 A2

Des Weiteren erfolgt eine Eingabe für Kältemittel. Hierbei wird festgelegt, welches Kältemittel in der Kälteanlage 1 vom Kälteanlagenbauer benutzt wird. Aufgrund der Kältemitteleingabe erfolgt automatisch die Auswahl des Drucksensors, die Auswahl der Druckberechnung und die Auswahl des Kältemittelpolynoms. Diese Auswahl ist abhängig von der Berechnung und Konstruktion der Kälteanlage und liegt im Ermessen des Kälteanlagenbauers.

Ferner erfolgt eine Eingabe zum Abgleich der Temperatur- und Drucksensoren. Hier werden Messabweichungen, die durch die Kabelverlegung und durch Klemmstellen hervorgerufen werden, abgeglichen. Da geringfügige Abweichungen der Temperaturen schon zu hohen regelungstechnischen Beeinflussungen führen, kann eine Eingabe dieser Parameter die Regelung erheblich verbessern.

Darüber Hinaus erfolgt die Eingabe der minimalen Regeldifferenz. Die minimale Regeldifferenz ist zuständig für die Ermittlung der Temperaturtendenzen. Die minimale Regeldifferenz ist ein fester Wert, ab dem die Regelung einsetzt. Die minimale Regeldifferenz verhält sich relativ zum Sollwert und wird in Kelvin angegeben. Sie hat zum Beispiel eine Größe von 1 K und ist veränderbar. Die tatsächliche Regeldifferenz während der Regelung ist gleich der Differenz von Sollwert minus Istwert.

Es erfolgt die Eingabe vom Intervall Pflichtabtauen. Die adaptive Abtauregelung benötigt eine Referenzabtauung, um den Verdampferzustand zu erfassen. So wird eine Referenz geschaffen, um den späteren Vereisungszustand des Verdampfers 6 festzustellen.

Weiter erfolgt die Eingabe einer Abtauendtemperatur. Nach dem Einleiten der Abtauung muss die Abtauung wieder begrenzt und beendet werden. Dieses erfüllt! dieser Parameter.

Im Hauptprogramm werden die Unterprogramme aufgerufen und abgearbeitet. In den Unterprogrammen werden die zuvor ermittelten Werte und Parameter mathematisch und logisch verwendet. Die Ergebnisse dieser regeltechnischen Abarbeitung werden auf dem Display, in der Statusanzeige und an den Ausgängen ausgegeben.

Im Folgenden wird zunächst das Unterprogramm Kühlen beschrieben, da dieses Unterprogramm wichtig ist, kann es auch im Hauptprogramm integriert sein. Das Kühlen erfolgt nach einem adaptiven und menschlichen Regelsinn. Hierbei wird auf Figur 3 Bezug genommen, in der in einem Diagramm ein beispielhafter Temperaturverlauf der Raumtemperatur über der Zeit dargestellt ist.

Im Unterprogramm Kühlen wird die Raumtemperatur mit dem Sollwertwert verglichen. Hierfür steht eine minimale Regeldifferenz zur Verfügung. Dabei wird das Verhalten ermittelt von Temperaturänderung zurzeit. Bei steigender Temperatur vom Sollwert zum Zeitpunkt t1 bis zur minimalen Regeldifferenz zum Zeitpunkt t2 wird die Zeitdauer des Anstiegs gemessen und gespeichert. Hierbei wird der Wärmeeintrag durch die Isolierung (äußerer Lastanteil) und die Wärmeabgabe vom Kühlgut 9 (innerer Lastanteil) festgestellt. Bei berechneter Leistung der Anlage und Bekanntheit der Parameter wie Kühlgut, Isolierung, Anzahl der Öffnungen wie Türen, Beleuchtung, Fremdgeräten und/oder Aufenthalt von Personen kann über den Raumtemperatursensor 11, den Sauggasfühler 28 und den Verdampfungsdrucksensor 29 diese Unterscheidung getroffen werden.

Danach wird bei Überschreitung der minimalen Regeldifferenz die Kühlung zum Zeitpunkt t2 zugeschaltet. Dabei wird die Dauer des Absinkens der Temperatur zwischen minimaler Regeldifferenz zum Zeitpunkt t3 und dem Sollwert zum Zeitpunkt t4 gemessen und gespeichert. Hierbei wird der Wärmeabtransport durch die Kälteanlage ermittelt. Nach erreichen der Solltemperatur zum Zeitpunkt t4 wird die Kältemaschine 1 abgeschaltet. Dabei wird die Temperatur und die Zeit ermittelt, die die Kühlanlage 1 bis zum Zeitpunkt t5 überschwingt. Hierbei wird die Latenz der Kühlanlage 1 im Zusammenhang mit dem Kühlraum 2 und dem Kühlgut 9 ermittelt.

Ab diesem Punkt werden die Temperaturen und die Zeiten ins Verhältnis gesetzt und der Microcontroller 10 berechnet daraus einen vorzeitigen Einschaltpunkt und einen vorzeitigen Ausschaltpunkt auch wenn die Temperaturen noch nicht erreicht wurden. Das heißt, dass die Kältemaschine vor Erreichen des Raumtemperatursollwertes (kurz vor t4) abgeschaltet wird und durch die Latenz des Verdampfers 6 und die Latenz des im Ausblas liegenden Kühlguts 9 der Raum 2 weiter bis zum Raumtemperatursollwert kühlt. Analog erfolgt eine vorzeitige Einschaltung vor Erreichen der minimalen Regeldifferenz, das heißt zu einem Zeitpunkt kurz vor dem Zeitpunkt t2.

Somit fährt die Kälteanlage 1 durchschnittlich in einem höheren Verdampfungsdruckbereich, wodurch sich die Laufzeit der Kältemaschine 1 verringert und eine Energieeinsparung von etwa 3 bis 5 % erzielt werden kann.

Das Unterprogramm EEV fährt nach einem adaptiven Regelprozess. In diesem Unterprogramm wird in dem Zustand Kühlen das elektronische Expansionsventil (EEV) 5 angesteuert. In diesem Zustand wird die wie oben erfasste und berechnete Überhitzung als Istwert genutzt. Wenn die Überhitzung den Sollwert überschreitet wird das Ventil 5 geöffnet und wenn die Überhitzung sich dem Sollwert nähert wird das EEV 5 wieder geschlossen. Für diesen Regelprozess wird ein PI-Regelverfahren genutzt. Für Einzelverdichterkälteanlagen besitzt dieses Unterprogramm eine Notöffnungsfunktion, die wie folgt funktioniert. Bei Unterschreitung eines relativen Arbeitsdruckes wird das Ventil sofort auf 100 % gefahren. Bei Überschreitung eines zweiten relativen Arbeitsdruckes geht das Ventil wieder in den normalen Regelprozess über. Somit wird verhindert, dass die Kälteanlage 1 über die Sicherheitsdruckschalter ein- und ausgeschaltet wird und somit eine erhöhte Taktfrequenz der Kältemaschine 1 auftritt. Um eine Überlastung der Kältemaschine 1 zu verhindern, besitzt das Unterprogramm einen MOP (Maximum Operation Point). Dieser begrenzt adaptiv die Verdampfungstemperatur. Somit wird bei hohen Raumtemperaturen der Verdichter 7 nicht überlastet. Das EEV 5 wird über ein PWM-Signal angesteuert. Hierbei wird eine maximale. Periode von 10 s vorgegeben und eine minimale Einschaltzeit von 1 s. Je nach benötigter Leistung verschiebt sich nun das PWM-Signal zwischen 1 s und 10 s mit 1 s Pause dazwischen.

In dem Unterprogramm Abtauen wird mit einem adaptiven Abtausystem die Abtauphase geregelt. Mit der Errichtung der Anlage wird von einem freien Verdampfer 6 ausgegangen. Dieser Zustand wird auch nach der Pflichtabtauung erreicht. Der Zustand nach dem Einschalten der Anlage oder nach der Pflichtabtauung ist die Grundlage für die Eisansatzmessung. Hierbei wird die Pakettemperatur während des Betriebes gemessen. Es entsteht eine Temperaturdifferenz zwischen der Raumtemperatur und der Pakettemperatur. Diese Differenz wird nun in einem Speicher 17, wie zum Beispiel einem EEPROM, oder in dem Microcontroller 10 gespeichert. Wenn der Eisansatz im Verdampfer 6 zunimmt, vergrößert sich diese Differenz. Wird diese Abtaudifferenz um beispielsweise 2 Kelvin überschritten, schaltet der Regler 3 in den Status Abtauung nötig um. Wenn dieser Zustand sich in einem Zeitfenster nicht geändert hat, wird die Abtauung eingeleitet. Dazu wird dem Verdampfer 6 Wärme zugeführt. Dadurch schmilzt das Eis im Verdampfer 6 und dieser wird eisfrei. Um nicht zu viel Wärme hinzuzufügen wird dieser Vorgang durch den Pakettemperatursensor 12 begrenzt und die Abtauung beendet. Nach Beendigung der Abtauung wird dieser Automatismus für zwei Stunden gesperrt.

Bevor die Kältemaschine 1 und das EEV 5 wieder angesteuert werden, wird eine adaptive Abtropfzeit eingefügt. In diesem Fall wird ermittelt, wie lange Wärme in den Verdampfer 6 gebracht wurde. Dieser Wert bezieht sich auf eine maximale Abtauzeit von 40 min. Die Abtropfzeit beträgt bei 40 min Abtauen gleich 5 min. Somit berechnet das Unterprogramm Abtauen, wenn nach 20 min der Verdampfer 6 eisfrei ist, wird nur noch eine Abtropfzeit von 2,5 min benötigt. Das Gleiche gilt für die Vorkühlphase. Die Vorkühlphase beträgt bei 40 min Abtauen gleich = 3 min. Somit berechnet das Unterprogramm Abtauen, wenn nach 20 min der Verdampfer 6 eisfrei ist und er 2,5 min abgetropft hat, gibt es eine Vorkühlzeit von 1,5 min. Nach der Vorkühlzeit geht die Regelung in den normalen Temperaturregelprozess über.

Im Unterprogramm Kühlraumtür geöffnet wird eine Funktion abgerufen, die ein Vereisen des Verdampfers 6 verhindern oder minimieren soll. An das Regelsystem kann dazu ein Türkontakt angeschlossen werden. Wenn die Tür 14 des Kühlraumes 2 geöffnet wird, wird als erstes der Verdampferlüfter abgeschaltet. Nach einer Minute wird auch das EEV 5 mit der Kältemaschine 1 abgeschaltet. Diese eine Minute ist dazu vorgesehen falls ein ständiges Rein- und Rausgehen in dem Kühlraum 2 erfolgt und dass dann die ganze Kühlanlage nicht ständig ein- und ausschaltet und der Verdampfer 6 vereist. Wenn eine Person die Tür 14 offen stehen lässt, wird nach 5 min die Kühlung zur Schadensbegrenzung wieder zugeschaltet und ein Türalarm ausgegeben. Dieser Alarm wird bis zur Beseitigung auf dem LED Display und am Alarmrelais 27 ausgegeben.

Im Unterprogramm Alarm werden alle Sensoren auf Kabelunterbrechung und Kurzschluss überwacht. Weiterhin werden Ober- und Untertemperatur überwacht und mit einer Verzögerung als Alarm ausgegeben. Alle Alarmmeldungen werden im LED Display mit einem Code angezeigt und das Alarmrelais wird geschaltet.

Die beschriebenen Unterprogramme können dauerhaft, zyklisch und/oder bei Bedarf ausgeführt werden. Zudem ist es möglich, Unterprogramme parallel auszuführen.

**Patentansprüche**

1.  Verfahren zur Regelung einer Raumtemperatur eines Raumes (2) mit einer Kühlvorrichtung (1), mit den Schritten:

> - Messen der Raumtemperatur;
> - Messen der Zeitdauer eines Temperaturanstiegs der Raumtemperatur von einem Sollwert bis zu einer minimalen Regeldifferenz;
> - Einschalten der Kühlvorrichtung (1) bei Überschreiten der minimalen Regeldifferenz;
> - Messen der Zeitdauer eines Temperaturabfalls der Raumtemperatur von der minimalen Regeldifferenz bis zu dem Sollwert;
> - Ausschalten der Kühlvorrichtung (1) bei Erreichen des Sollwerts;
> - Messen der Zeitdauer und/oder der Temperatur eines Überschwingens der Kühlvorrichtung (1) nach Erreichen des Sollwerts;
> - Berechnen eines vorzeitigen Einschaltpunkts und/oder eines vorzeitigen Ausschaltpunktes für die Kühlvorrichtung (1) basierend auf wenigstens einer Zeitdauer und/oder wenigstens einer gemessenen Temperatur; und
> - Regeln der Raumtemperatur unter Verwendung des vorzeitigen Einschaltpunkts und/oder des vorzeitigen Ausschaltpunkts für die Kühlvorrichtung (1).

2.  Verfahren nach Anspruch 1, wobei eine Pakettemperatur eines Verdampferpakets gemessen wird und bei Überschreiten einer vorbestimmten Differenz zwischen der Raumtemperatur und der Pakettemperatur ein Abtauvorgang eines Verdampfers (6) der Kühlvorrichtung (1) vorgenommen wird.

3. Verfahren nach Anspruch 1 oder 2, wobei eine Überhitzung der Kühlvorrichtung (1) ermittelt wird anhand der Differenz einer Sauggastemperatur, die an einer Ableitung eines Verdampfers (6) der Kühlvorrichtung (1) gemessen wird, und einer Verdampfungstemperatur, die basierend auf einem gemessenen Druck eines Kältemittels der Kühlvorrichtung (1) ermittelt wird.

4. Verfahren nach Anspruch 3, wobei ein Expansionsventil (5) basierend auf der Überhitzung angesteuert wird.

5. Verfahren nach einem der Ansprüche 1 bis 4, wobei der Öffnungszustand einer Tür (14) des Raums (2) überwacht wird und bei geöffneter Tür (14) die Kühlvorrichtung (1) ausgeschaltet wird.

6. Regler für eine Kühlvorrichtung eines Raumes (2), aufweisend einen Eingang (18) für einen Raumtemperatursensor (11) zum Messen einer Raumtemperatur, eine Recheneinheit (10) eingerichtet zur Berechnung eines vorzeitigen Einschaltpunkts und/oder eines vorzeitigen Ausschaltpunkts für die Kühlvorrichtung (1) basierend auf gemessenen Temperaturverläufen der Raumtemperatur und einen Ausgang (23) zum Einschalten und/oder Ausschalten der Kühlvorrichtung (1) gemäß dem vorzeitigen Einschaltpunkt und/oder dem vorzeitigen Ausschaltpunkt.

7. Regler nach Anspruch 6, aufweisend einen Eingang (19) für einen Pakettemperatursensor (12) zum Messen einer Pakettemperatur eines Verdampferpakets und einen Ausgang (24) für einen Abtauvorgang eines Verdampfers (6) der Kühlvorrichtung (1), wobei die Recheneinheit (10) eingerichtet ist, bei Überschreiten einer vorbestimmten Differenz zwischen der Raumtemperatur und der Pakettemperatur am Ausgang (24) für einen Abtauvorgang ein Signal für einen Abtauvorgang zur Verfügung zu stellen.

8. Regler nach Anspruch 6 oder 7, aufweisend einen Eingang (20) für einen Sauggastemperatursensor zum Messen einer Sauggastemperatur an einer Ableitung eines Verdampfers (6) der Kühlvorrichtung (1), einen Eingang (21) für einen Kältemitteldrucksensor zum Messen eines Drucks eines Kältemittels der Kühlvorrichtung (1) und einen Ausgang (26) für ein Expansionsventil (5) der Kühlvorrichtung (1), wobei die Recheneinheit (10) eingerichtet ist, eine Überhitzung der Kühlvorrichtung (1) anhand der Differenz der Sauggastemperatur und einer Verdampfungstemperatur, die basierend auf einem gemessenen Druck des Kältemittels ermittelt wird, zu ermitteln und basierend auf der Überhitzung am Ausgang (26) für das Expansionsventil ein Signal für das Expansionsventil (5) zur Verfügung zu stellen.

9. Regler nach einem der Ansprüche 6 bis 8, aufweisend einen Eingang (22) für einen Öffnungszustand einer Tür (14) des Raums (2), wobei die Recheneinheit (10) eingerichtet ist, bei geöffneter Tür (14) am Ausgang ein Signal zum Ausschalten der Kühlvorrichtung (1) zur Verfügung zu stellen.

10. Kühlvorrichtung für einen zu kühlenden Raum (2), aufweisend einen Regler (3) nach einem der Ansprüche 6 bis 9.

Figur 1

Figur 2

Figur 3